# EUROPEAN PATENT SPECIFICATION

(11) **EP 4 106 565 B1**
(45) Date of publication and mention of the grant of the patent: **03.04.2024**
(21) Application number: 21704932.9
(22) Date of filing: 08.02.2021
(51) Int. Cl.: A24F 40/53, A24F 40/60

(54) **VAPOUR PROVISION SYSTEM**
DAMPFBEREITSTELLUNGSSYSTEM
SYSTÈME DE FOURNITURE DE VAPEUR

(30) Priority: 20.02.2020 GB 202002383
(43) Date of publication of application: 28.12.2022
(73) Proprietor: Nicoventures Trading Limited, London WC2R 3LA (GB)
(72) Inventor: MOLONEY, Patrick, LONDON WC2R 3LA (GB); CHAN, Justin Han Yang, LONDON WC2R 3LA (GB)
(74) Representative: Dehns
(86) International application number: PCT/GB2021/050277
(87) International publication number: WO 2021/165643

(56) References cited:
- WO-A1-2020/006311
- US-A1- 2015 020 825
- US-A1- 2016 045 685

## Description

### Field

The present invention relates to vapour provision systems such as nicotine delivery systems (e.g. electronic cigarettes and the like), and in particular to providing users with the ability to determine an intensity at which vapour is generated by vapour provision systems.

### Background

Electronic vapour provision systems such as electronic cigarettes (e-cigarettes) generally contain a vapour precursor material, such as a reservoir of a source liquid containing a formulation, typically comprising a base liquid with additives such as nicotine and often flavourants, and / or a solid material such as a tobacco-based product, from which a vapour is generated for inhalation by a user, for example through heat vaporisation. Thus, a vapour provision system will typically comprise a vapour generation chamber containing a vaporiser, e.g. a heating element, arranged to vaporise a portion of precursor material to generate a vapour in the vapour generation chamber. As a user inhales on the device and electrical power is supplied to the vaporiser, air is drawn into the device through inlet holes and into the vapour generation chamber where the air mixes with the vaporised precursor material to form an aerosol. There is a flow path connecting the vapour generation chamber with an opening in the mouthpiece so the incoming air drawn through the vapour generation chamber continues along the flow path to the mouthpiece opening, carrying some of the vapour with it, and out through the mouthpiece opening for inhalation by the user.

Vapour provision systems may comprise a modular assembly including both reusable and replaceable cartridge parts. Typically a cartridge part will comprise the consumable vapour precursor material and / or the vaporiser, while a reusable device part will comprise longer-life items, such as a rechargeable battery, device control circuitry, activation sensors and user interface features. The reusable part may also be referred to as a control unit or battery section and replaceable cartridge parts that include both a vaporiser and precursor material may also be referred to as cartomisers.

Cartridges are electrically and mechanically coupled to a control unit for use, for example using a screw thread or bayonet fixing with appropriately engaging electrical contacts. When the vapour precursor material in a cartridge is exhausted, or the user wishes to switch to a different cartridge having a different vapour precursor material, a cartridge may be removed from the control unit and a replacement cartridge attached in its place.

Thus a vapour provision system will generate a vapour for inhalation by a user to deliver a desired taste / smell sensation and / or deliver nicotine. The vapour exhaled by a user following inhalation is often visible. In particular, some vapour precursor material may generate vapour having a low (or no) degree of visibility. The presence of visible vapour may be desirable. However, in some scenarios this may not be a desired characteristic of the vapour, for example, when a user wishes not to draw attention to their use of the vapour provision system. A visible vapour provides a readily-perceptible indication of an extent of an inhalation: a strong and/or long inhalation results in a greater quantity of visible vapour. When the vapour is less visible (or has a low degree of visibility) a user is less able to perceive an extent of an inhalation, and it may be difficult for a user to gauge how much aerosol they have inhaled, particularly for users who are accustomed to products (including conventional tobacco products) where an exhalate (proportional to the amount of aerosol inhaled) is always visible.

In view of this, the inventors have recognised a desire to provide approaches for providing an improved indication of a strength of an inhalation to a user of a vapour provision system.

WO 2020/006311 describes a vaporizer device that provides an LED indication responsive to inhalation on the device by a user, incorporating feedback on the strength of inhalation.

### Summary

Aspects and embodiments of the present invention are set out in the appended claims.

A first aspect of the present invention provides an aerosol provision system for generating an aerosol for inhalation by a user comprising: a housing enclosing at least partially an air channel and an aerosol generating element; a detector configured to detect an instantaneous strength of inhalation by detecting an amount of air flow or a pressure difference in the air channel during an inhalation by the user; a first indicator configured to provide a first indication to the user; and a controller connected to the detector and the first indicator,the controller configured to control the first indicator to generate the first indication to the user during the inhalation, the indication varying during the inhalation based on the instantaneous strength of inhalation detected by the detector.

A second aspect of the present invention provides a method of providing an indication to a user during use of an aerosol provision system to generate an aerosol for inhalation by a user, the method comprising: detecting an instantaneous puff strength by detecting an amount of air flow or a pressure difference in an air channel of an aerosol provision device during an inhalation by the user; and generating an indication to the user during the inhalation, the indication varying during the inhalation based on the instantaneous puff strength.

These and further aspects of certain embodiments are set out in the appended independent and dependent claims.

### Brief Description of the Drawings

Embodiments will now be described, by way of example only, with reference to the accompanying drawings, in which:
Figure 1 represents in highly schematic cross-section an aerosol provision system in accordance with certain embodiments of the disclosure;
Figure 2 represents a schematic showing features of the aerosol provision system of Figure 1;
Figure 3 is a flow diagram schematically representing a method of operating the aerosol provision system of Figures 1 and 2 in accordance with certain embodiments of the disclosure;
Figure 4 shows graphs representing a variation of inhalation strength over time and corresponding feedback according to embodiments of the present disclosure; and
Figure 5 shows a graph of feedback over time by means of pulse modulation as a means of providing haptic feedback of varying intensity over time during an inhalation according to embodiments of the present disclosure.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

The present disclosure relates to vapour provision systems, which may also be referred to as aerosol provision systems. More specifically, the present disclosure relates to non-combustible aerosol provision systems that release compounds from an aerosol-generating material (or vapour precursor material) without combusting the aerosol-generating material, such as electronic cigarettes, tobacco heating products, and hybrid systems to generate aerosol using a combination of aerosol-generating materials. Throughout the following description the term "e-cigarette" or "electronic cigarette" may sometimes be used; however, it will be appreciated this term may be used interchangeably with vapour provision system and electronic vapour provision system. Furthermore, and as is common in the technical field, the terms "vapour" and "aerosol", and related terms such as "vaporise", "volatilise" and "aerosolise", may also be used interchangeably.

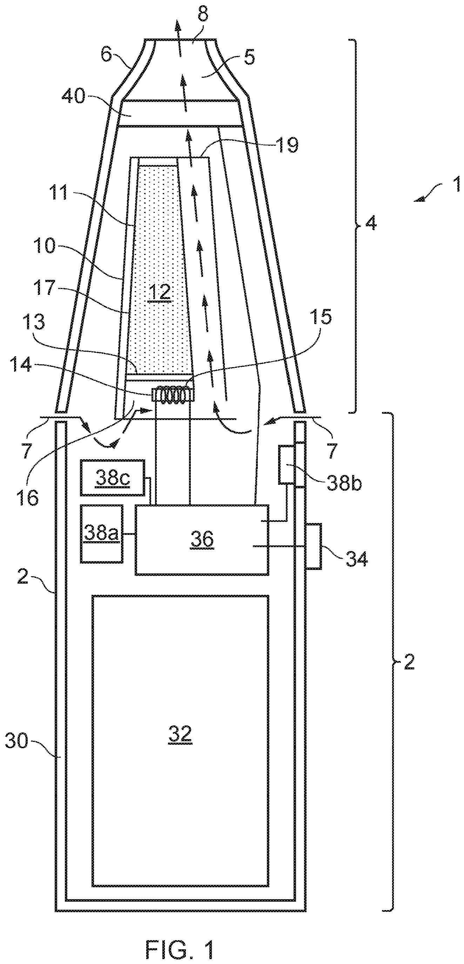

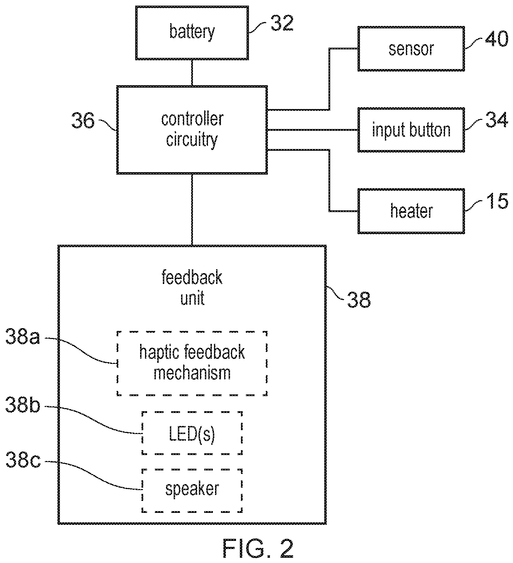

Figures 1 and 2 are respectively schematic cross-sectional and perspective views of an example aerosol provision system 1 in accordance with some embodiments of the disclosure. The view of Figure 2 is partially exploded in showing the aerosol provision system 1 with a mouthpiece cover 6 separated from the remainder of the system / device.

The aerosol provision system 1 may be considered to comprise two main components, namely a control unit 2 and a vapour generation assembly 4. The vapour generation assembly 4 comprises, in this example, one cartridge 10 having a source of vapour precursor material (other example implementations may comprise more than one cartridge / source of vapour precursor material). Thus, the vapour assembly 4 comprises a cartridge 10 for generating a vapour. In some embodiments, two or more cartridges may be present, for generating vapours having different visibilities, as described in [1]. Referring again to Figures 1 and 2, The cartridge 10 is removably mounted to the control unit 2 in an appropriate manner (e.g. using a conventional bayonet fixing, screw thread or friction-fit fixing). The mouthpiece cover 6, which is generally hollow, is also removably coupled to the control unit 2, and again this may be achieved in accordance with any conventional coupling / mounting technique, e.g. a snap-fit fixing. In the cross-sectional representation of Figure 1 the mouthpiece cover 6 is shown coupled to the control unit 2 for normal use in which it covers the cartridge 10. In the perspective view of Figure 2, the mouthpiece cover 6 is shown separated from the control unit 2, for example to provide access to the cartridge 10 to allow it to be replaced. The mouthpiece cover 6 is provided with a tapered end having an opening 8 that defines a vapour outlet through which a user may inhale vapour generated by the electronic cigarette 1 during use.

A liquid vapour precursor material for an electronic cigarette will typically comprise a base liquid formulation, which makes up the majority of the liquid, with additives for providing desired flavour / smell / nicotine delivery characteristics to the base liquid. Different base liquids are associated with vapours having different degrees of visibility. For example, a typical base liquid may comprise a mixture of propylene glycol (PG) and vegetable glycerol (VG), and a base liquid having a relatively high proportion of VG will typically create a more visible (less transparent) vapour than an otherwise corresponding base liquid having a relatively low proportion of VG. For the sake of a concrete example, it is assumed here the base liquid used in the cartridge comprises 80% PG and 20% VG, which is associated with generating a relatively invisible (less-visible) vapour. Where another cartridge is present (as described in [1]), the other cartridge may contain a base liquid formulation comprising 80% VG and 20% PG, generating a relatively visible vapour.

Thus, one reason that the vapour may be invisible is by virtue of the nature of the vapour itself (i.e., the base liquid). However, the present disclosure is not so limited and may be used to provide feedback in any suitable scenario where the user is unable to visually perceive the vapour (which may be visible in other circumstances or to other individuals).

This may be because the user is in a dark environment, because the user is visually impaired, or because, in use, there is an obstruction between the user's eyes and the exhalate. For example, the user may be wearing head-mounted equipment such as virtual reality display equipment which prevents the user from seeing the vapour. In some examples, the user is able to control the visibility of the vapour, for example by use of a multi-cartridge aerosol provision system as described in [1], and the vapour may thus be relatively less visible based on the user's control.

The cartridge 10 comprises a cartridge housing 17, which in this example is formed of a plastics material. The housing 17 supports other components of the cartridge and also provides a mechanical interface with the control unit 2. The manner by which the cartridge 10 mounts to the control unit is not significant to the principles described herein, but for the sake of a concrete example is assumed here to comprise a screw thread fitting (not represented in Figure 1).

The cartridge housing 17 is generally circularly symmetric about a longitudinal axis with a tapering profile so it reduces in cross section with increasing distance from the end of the cartridge 10 which couples to the control unit 2. In this example the cartridge has a length of around 4 cm and a diameter that tapers down approximately linearly from around 1 cm to 0.7 cm over this length. However, it will be appreciated the specific geometry, and more generally the overall shapes involved, may be different in different implementations.

Within the cartridge housing 17 is a liquid reservoir 11 that contains the vapour precursor material in the form of the first source liquid 12 discussed above. The liquid reservoir 11 in this example comprises the majority of the interior volume of the cartridge 10. The liquid reservoir 11 generally conforms to the interior of the housing 17 in having a tapering circular cross section, but having a flat face running longitudinally along one side to create a space between an outer wall of the reservoir 11 and an inner wall of the housing 17. This defines an air path through the cartridge through which vapour generated in the cartridge is drawn during use towards an opening 19 in the end of the cartridge into the chamber / region 5 within the mouthpiece cover 6. This air-path through the cartridge is schematically represented by the series of arrows indicating airflow through the vapour provision system 1 during use. The reservoir 11 may be formed in accordance with conventional techniques, for example comprising a moulded plastics material.

An end of the reservoir 11 opposite to the cartridge outlet 19 is defined by a porous ceramic disc 13 such that source liquid 12 within the reservoir 11 may seep through the ceramic disc 13.

Adjacent the ceramic disc 13 on the outside of the reservoir 11 is a vaporiser (atomiser) comprising a wick 14 and heater 15. The wick and heater are arranged in a space within the cartridge housing 17 that defines a vaporisation chamber 16 for the cartridge 10. Source liquid which has seeped through the ceramic disc 13 may infiltrate the wick 14 through surface tension / capillary action. A part or parts of the wick 14 may contact the ceramic disc 13. The heater 15 in this example comprises an electrically resistive wire coiled around the wick 14. Electrical power may be supplied to the heater 15 to vaporise an amount of source liquid (vapour precursor material) drawn to the vicinity of the heater 15 by the wick 14. In this example the heater 15 comprises a nickel chrome alloy (Cr20Ni80) wire and the wick 14 comprises a glass fibre bundle, but it will be appreciated that the specific vaporiser configuration is not significant to the principles described herein. Indeed, other vaporiser configurations may include a ceramic element with a resistive metal track on a surface thereof, or a collection of sintered fibres arranged in a planar structure. Additionally, the ceramic disc 13 may not be provided, and instead the vaporiser may be integrated with the housing defining the reservoir, e.g., the wick may protrude through a hole in a surface of the reservoir 11.

The rate at which source liquid is vaporised by the vaporiser will depend, in part, on the amount of power supplied to the heater 15. Accordingly, electrical power can be applied to the heater to selectively generate vapour from the source liquid 12 in the cartridge 10, and furthermore, at least in some example implementations, the rate of vapour generation can be controlled by adjusting the power supplied to the heater 15, for example through pulse width and/or frequency modulation techniques.

The control unit 2 comprises an outer housing 30, a battery 32 for providing operating power for the electronic cigarette, control circuitry 36 for controlling and monitoring the operation of the electronic cigarette and a user input button 34. The battery 32 is rechargeable and may be of a conventional type, for example of the kind normally used in electronic cigarettes and other applications requiring provision of relatively high currents over relatively short periods. Similarly, the user input button 34 may be a conventional input device, for example a mechanical button switch or capacitive (touch) sensor.

The control unit 2 further comprises a feedback unit 38 and a sensor 40. The sensor 40 (which may be referred to as a detector) may be disposed within the air path and may measure a rate of flow of air and/or vapour through the air path. The rate of flow of air or vapour through the air path is proportional to the strength of the user's puff or inhalation on the device 1 (i.e., at opening 8). Accordingly, the sensor 40 may be capable of measuring / detecting an instantaneous strength of inhalation.

In the example of Figure 1, the sensor 40 is shown in the air path at the mouthpiece, however it may be located at other positions within the air path, such as within the air path adjacent to inlets 7.

The feedback unit 38 comprises one or more of a haptic feedback mechanism 38a (or haptic indicator) for generating a haptic feedback signal or haptic indication, a visible feedback mechanism 38b (or visible indicator) for generating an optical (e.g., visible) feedback signal or optical (e.g., visible) indication, and an audio feedback mechanism 38c for generating an audio feedback signal or an audio indicator. However, it should be understood that other feedback mechanisms may additionally or alternatively be employed in accordance with the principles of the present disclosure.

The haptic feedback mechanism 38a may comprise a motor attached to an eccentric cam. The haptic feedback mechanism 38a may comprise a linear cam.

In some embodiments, the visible indicator 38b may comprise one or more light emitting diodes which are visible in operation to the user. For example, they may be disposed within the control unit 2 behind a transparent or translucent portion of the outer housing 30. Where two or more visible indicators are provided, each may emit light of a different colour; for example, a red, green and amber LED may be provided.

In some embodiments, the audio feedback mechanism 38c comprises a speaker 38c for generating the audio feedback signal or audio indicator, e.g., a sound perceivable by a human.

In some embodiments, feedback mechanism 38 comprises at least a haptic feedback mechanism 38a. Haptic feedback mechanism 38a may be a particularly advantageous mechanism for providing feedback to the user because, during use, the user is highly likely to be holding the aerosol provision system 1. As a result, the haptic feedback signal is perceivable by the user (e.g., through their hand) at any given moment during use. This may not necessarily be the case with the visible indicator 38b, which may require the user to hold the system 1 in a particular orientation to be able to view the visible signal output from the visible indicator 38b and/or be in an environment where the visible signal is diluted by the level of ambient light. Equally, this may not necessarily be the case with the audio indicator 38c, for instance if the user has a hearing disability or if the user is using the system 1 in a particularly noisy environment.

In some embodiments, the haptic feedback mechanism 38a may provide user feedback via the user input button 34; that is, the haptic feedback mechanism 38a is incorporated within, or mechanically coupled to, the user input button 34 such that in operation, the user detects the haptic feedback via a finger in contact with the user input button 34. Alternatively, the haptic feedback mechanism 38a may be located in a part of the body / outer housing 30 of control unit 2 and a user is able to detect the haptic feedback through their hand via holding the body / outer housing 30 of the control unit during use.

The outer housing 30 may be formed, for example, from a plastics or metallic material and in this example has a generally elliptical / oval cross sectional with a width (in the plane of Figure 1) of around 1.5 to 2 times its thickness (perpendicular to the plane of Figure 1). For example, the electronic cigarette may have a width of around 3 cm and a thickness of around 2 cm. The mouthpiece cover 6 discussed above has an outer form which generally conforms to the outer form of the control unit 2 where they meet to provide a relatively uniform and smooth appearance for the electronic cigarette 1 as a whole. The end of the mouthpiece cover 6 defining the vapour outlet 8 is tapered down to around one third or so of its dimensions at the end that couples to the control unit 2 (e.g. to around 1 cm wide and 0.6 cm thick). The control unit 2 and mouthpiece cover 6 in this example both have a length of around 5 cm such that the assembled electronic cigarette has a length of around 10 cm. However, and as already noted, it will be appreciated that the overall shape and scale of an electronic cigarette implementing an embodiment of the disclosure is not significant to the principles described herein.

In some embodiments, the system comprises an obstructing part (not shown in Figure 1) located, in use, between the users' eyes and a region in front of the user's face to which the exhalate is exhaled. The obstructing part may thus prevent the user from visually perceiving (or reduce the ability of the user to visually perceive) the exhalate, irrespective of the nature of the exhalate. In some embodiments, the obstructing part comprises a head-mountable display. The head-mountable display may comprise one or more displays, on which a virtual or augmented reality display may be presented.

Figure 2 shows schematically connections between various features of the aerosol provision system 1.

Each of the sensor 40, input button 34, battery 32 and feedback unit 38 are connected to the control circuitry 36. Where the heater 15 is integral to the controller unit 2, electrical power is supplied to the heater directly from the control circuitry 36. Where the heater 15 is integral to the cartridge 10, electrical power is supplied to the heater from the control circuitry 36 via contacts established across the interface between the cartridge 10 and the controller unit 2, for example through sprung / pogo pin connectors, or any other configuration of electrical contacts which engage when the cartridge 10 is connected to the control unit 2.

The control circuitry 36 is suitably configured / programmed to provide functionality in accordance with embodiments of the disclosure as described herein, as well as for providing conventional operating functions of the electronic cigarette in line with the established techniques for controlling such devices. Thus the control circuitry 36 may be considered to logically comprise a number of different functional blocks, for example a functional block for controlling the supply of power from the battery 32 to the heater 15 in the cartridge 10, a functional block for controlling operational aspects of the device in response to user input using the user input button 34, for example configuration settings, a functional block for controlling the feedback unit 38 in response to input from the sensor 40 as well as other functional blocks associated with the normal operation of electronic cigarettes and functionality in accordance with the principles described herein. The user input button 34 may generate a signal indicative of a pressure applied to the button and the power supplied to the heater 15 may vary in accordance with the pressure applied to the user input button 34.

The control circuitry 36 may, in some embodiments, increase the power supplied to the heater 15 in response to detected repeated button presses within a short time (e.g. within a time period corresponding to a typical single inhalation).

The control circuitry 36 may, in some embodiments, control the visible indicator 38b to generate a visible indication that the aerosol provision system is in a standby mode, in which the aerosol provision system is configured to generate the vapour for inhalation in response to a detected inhalation and/or user interaction (such as the application of pressure to the user input button 34).

It will be appreciated the functionality of these logical blocks may be provided in various different ways, for example using a single suitably programmed general purpose computer, or suitably configured application-specific integrated circuit(s) / circuitry. As will be appreciated the electronic cigarette will in general comprise various other elements associated with its operating functionality, for example a port for charging the battery, such as a USB port, and these may be conventional and are not shown in the figures or discussed in detail in the interests of brevity.

The control circuitry 36 is configured to control the supply of electrical power from the battery 32 to the heater 15 in the cartridge 10 so as to generate a vapour from the cartridge for inhalation by a user.

In operation, when the user inhales via the opening 8, air is drawn into the device via inlets 7 and mixes with vapour generated in the vicinity of the heater 15. The mixture then flows along the air path to the opening 8 where the mixture is inhaled. The sensor 40 can detect when the user is inhaling on the device via the opening 8. Moreover, the sensor 40 can detect an instantaneous strength of inhalation.

The sensor 40 outputs a signal which is indicative of the strength of the user's inhalation (which may herein be referred to as an "inhalation strength signal") which is received by the control circuitry 36. The control circuitry 36, based on the inhalation strength signal, determines whether feedback is to be provided to the user. If feedback is to be provided, then the characteristics of the feedback (which may include type and/or operational parameters) depends on the detected strength of inhalation, as indicated by the inhalation strength signal. During the inhalation, measurement of the inhalation strength continues, and the feedback is adapted based on the measured inhalation strength. Thus, the feedback may vary during the course of the inhalation.

In some implementations, the control circuitry 36 may be configured to compare the instantaneous inhalation strength (or a signal indicative thereof) to a predetermined threshold and determine whether feedback is to be provided based on a comparison with the predetermined threshold. The control circuitry 36 may be configured to provide feedback in response to detecting an inhalation has occurred or in response to the instantaneous inhalation strength exceeding a certain magnitude. In either case, the predetermined threshold is greater than a value corresponding to ambient conditions sensed by the sensor 40. In the former case, the predetermined threshold may be slightly above ambient conditions as sensed by the sensor 40, whereas in the latter case the predetermined threshold may be significantly greater than the ambient conditions sensed by the threshold. In either case, the predetermined threshold may be set based on previously measured values of the ambient conditions as measured by the sensor 40 (e.g., an average measure of the ambient conditions), or alternatively the predetermined threshold may be a fixed value set in advance.

For example, in some embodiments, when the inhalation strength exceeds a first predetermined threshold, haptic feedback is generated by the motor 38a, an intensity of the haptic feedback being based on the inhalation strength. Further examples of the feedback are described below.

Accordingly, the user holding the aerosol provision system 1 is able to perceive firstly that the aerosol provision system is operating correctly, and to perceive an indication of the strength of their inhalation.

Providing such feedback to a user can help the user appreciate how much aerosol (and thus in some implementations how much active, e.g., nicotine, they have inhaled). In scenarios where an exhalate is largely visible and/or observable by a user, the user is able to gauge how much aerosol (and thus active) they have inhaled based, in part, on the amount of exhalate exhaled. This can help inform the user how to (or in some cases whether or not to) inhale for a subsequent puff. However, in the absence of the visible exhalate, the user may feel unsettled or unsure as to how much aerosol they are actually inhaling. This may be particularly important for devices that do not have a natural session end, such as aerosol provision systems which in some cases may provide upwards of 100 puffs (contrary to conventional cigarettes for example that have a clear session end). Accordingly, providing the user with additional feedback can help the user self-regulate their aerosol (and optionally active) intake, particularly in the absence of a visible exhalate. That is, in instances where the exhalate is invisible and/or obstructed from view, providing such feedback acts to inform and/or reassure users as to how much they have inhaled, particularly for users who are used to exhalate always being visible

In some embodiments, based on the feedback received, the user may be able to change their puffing behaviour and/or the amount of aerosol generated during a single inhalation. For example, the user may be able to reduce or release the pressure on the user input button 34 to cause the aerosol generation to reduce or stop during the inhalation in response to the feedback, or alternatively the user may inhale more or less strongly. As a further example, in some embodiments, the power to the heating element may be increased in response to user input during the inhalation. Thus, for example, the user may be able to cause the rate of aerosol generation to change during a single inhalation in response to the feedback, for example to increase the aerosol generation rate by repeatedly pressing on the user input button 34, or by increasing the pressure applied to the user input button 34 to cause the power to the heating element to be increased.

It will of course be appreciated that the specific reasons why and circumstances under which a user cannot see the vapour, or where the vapour is only barely visible to the user, are not significant to the principles described herein.

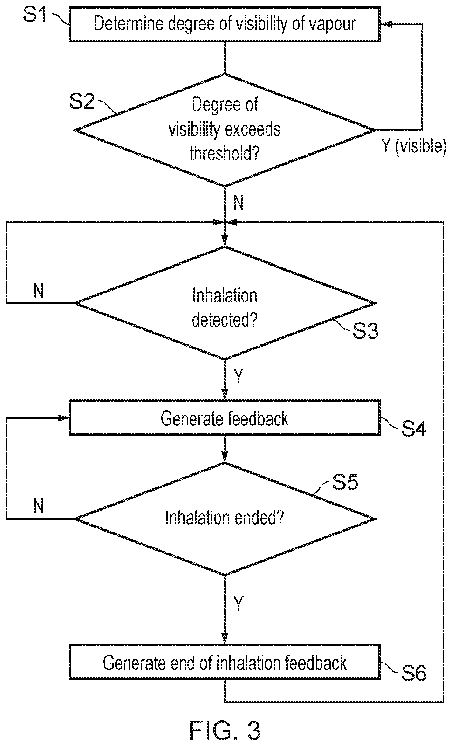

Figure 3 is a flow chart schematically representing some operational steps for the vapour provision system 1 represented in Figures 1 and 2 in accordance with an embodiment of the present disclosure. The control circuitry 36 is configured to implement this processing in accordance with conventional programming / processing techniques.

In step S1, the control circuitry 36 determines the degree or magnitude of visibility of the vapour to be generated. This step may apply where the visibility of the vapour to be generated can be controlled by the user, such as in the example described in [1], where different cartridges containing different source liquids can be selectively aerosolised. For example, the control circuitry 36 may determine which one or more of a plurality of cartridges is/are selected for generating the vapour and accordingly determine the expected visibility of the generated vapour.

In step S2, the control circuitry 36 determines whether the determined degree or magnitude of the visibility in step S1 justifies providing additional feedback (e.g., via feedback unit 38). In the described example, this step comprises comparing the degree or magnitude of visibility of vapour to be generated determined in step S1 exceeds a predetermined threshold. If it does exceed the threshold, the process ends or may return to step S1. If it does not exceed the threshold (i.e. the visibility is low), then the process continues with step S3. In some examples, the control circuitry 36 may determine whether the additional feedback based on an indication provided by cartridge 10. For example, the cartridge 10 may comprise a machine-readable chip or radio frequency identification (RFID) tag which indicates whether the feedback is to be provided or not and/or indicates an expected degree or magnitude of the visibility of the vapour to be generated.

In some embodiments, an additional or alternative step may comprise evaluating a user mode of operation. For example, a user may configure a setting of the aerosol provision system 1 to correspond to a mode of operation in which inhalation strength feedback is required. If in this step it is determined that inhalation strength feedback is required, then the process continues with step S3, otherwise the process stops, or returns to an earlier step. At step S3, the control circuitry 36 determines, based on the inhalation strength signal generated by the sensor 40, whether an inhalation has been detected. For example, the control circuitry 36 may determine whether the measured air flow exceeds a predetermined inhalation start threshold. The predetermined inhalation start threshold may be configured to avoid 'false positive' indications, which may arise in use as a result of sensor measurement accuracy, movement of the aerosol provision system, changes in ambient pressure, or for any other reason.

If no inhalation is detected at step S3, the process may end, or (as shown) may continue with step S3 or with step S1.

If at step S3 an inhalation is detected, the process continues with step S4.

At step S4, the control circuitry 36 controls the feedback unit 38 to generate inhalation feedback (e.g., at least one of a haptic feedback signal, an optical feedback signal or an audio feedback signal), the inhalation feedback being based on at least the inhalation strength signal.

At step S5, the control circuitry 36 determines whether the present inhalation has ended. For example, the control circuitry 36 may determine that the present inhalation has ended if the measured inhalation strength indicated by the inhalation strength signal has fallen below a predetermined inhalation end strength threshold, or has been below the predetermined inhalation end strength threshold for longer than a predetermined inhalation end duration.

If at step S5, it is determined that the present inhalation has ended, then the process continues with step S6. If it is determined that the present inhalation has not ended, the process continues with step S4.

At step S6, the control circuitry 36 may control the feedback unit 38 to generate 'end of inhalation' feedback. This may comprise, for example, a steady decay of feedback intensity, or a particular feedback to indicate to the user that the end of the inhalation has been detected, as will be described below. It may also provide for a more comfortable feedback than where the feedback ends abruptly in response to the detected end of an inhalation. In particular, this may be preferable when the end of inhalation is abrupt such as, for example, when the aerosol provision system is removed from the user's mouth during the inhalation.

After step S6, control returns to step S3.

It will be appreciated that one or more of the steps described above may be modified, reordered or omitted. For example, steps S1 and S2 may be omitted if the degree of visibility of the vapour is fixed for a given cartridge 10 or source liquid 12. Step S6 may be omitted in some examples.

In addition, in some implementations, when the control circuitry 36 determines the presence of an inhalation (e.g., at step S3), the control circuitry 36 may be configured to activate the heater 15 (i.e., supply power to the heater to cause the heater to increase in temperature to a level sufficient to generate vapour). Equally, when the control circuitry 36 determines the inhalation has ended (e.g., at step S5), the control circuitry 36 may be configured to deactivate the heater 15 (i.e., stop supplying power to the heater to generate vapour). This may be advantageous when the device does not comprise a user input button 34, for example.

### Feedback examples

In some embodiments, the feedback unit 38 comprises a source of haptic feedback, such as a motor with eccentric cam, which can provide the haptic feedback (haptic feedback signal) at different levels of intensity or which varies in some manner based on the measured inhalation strength.

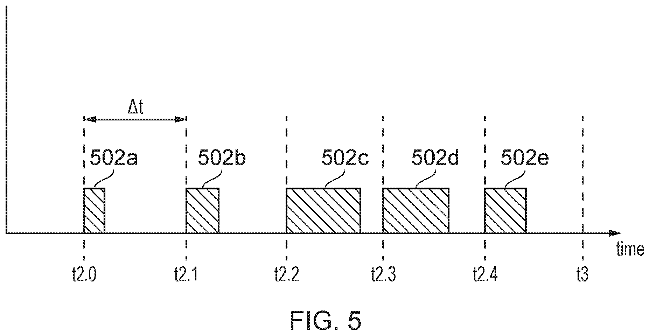

For example, the haptic feedback may be pulse modulated, where an on ratio (i.e. a ratio of an on duration within a period to the duration of the period) is varied based on a mapping to the measured inhalation strength. For example, the on ratio may be increased from 50% (i.e. the haptic feedback occurs for a first time period, and then ceases for a second time period equal to the first time period) to 100% (where the haptic feedback is constantly on) in response to the measured inhalation strength increases from a first level to a second level. An example of such a variation is illustrated in Figure 5 and described below.

Additionally or alternatively, the intensity of the haptic feedback may be varied by varying the speed of the motor (and hence the frequency of resulting vibrations). The intensity of the haptic feedback may additionally or alternatively be varied by varying an amplitude of vibration of the haptic feedback, if suitable to do so depending on the specific feedback mechanism used.

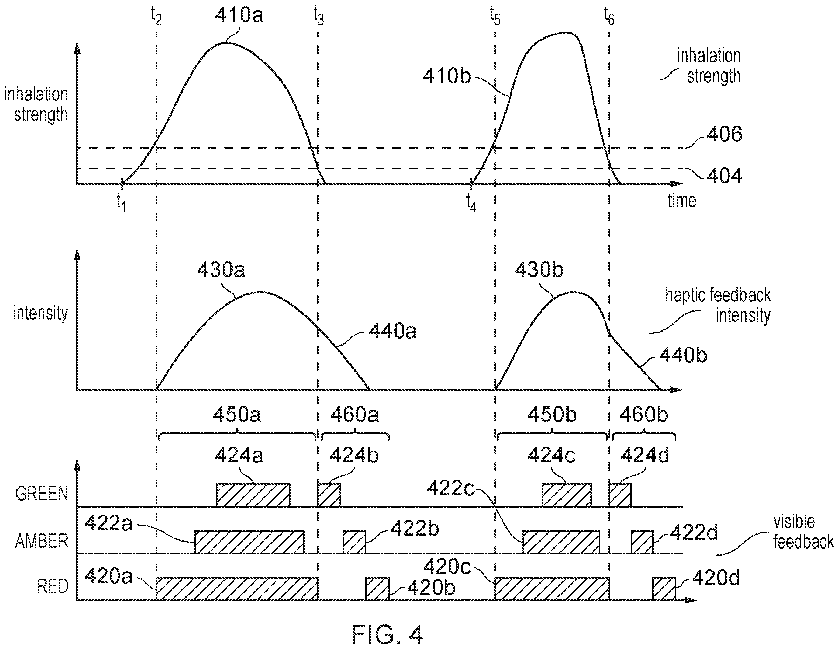

Figure 4 illustrates example feedback based on inhalation strength.

The top portion of Figure 4 illustrates measured inhalation strength over time as measured by the sensor 40. Horizontal lines 404 and 406 show the predetermined inhalation end threshold and predetermined inhalation start thresholds respectively. Although the inhalation end threshold 404 is shown as being lower than the inhalation start threshold 406, this may be reversed, or the thresholds may be the same, in other implementations.

At time t1, a first inhalation 410a begins, and at time t2, the measured inhalation strength exceeds the predetermined inhalation start threshold 406. The inhalation strength continues to rise, and subsequently falls back below the predetermined inhalation end threshold 404 at time t3.

Similarly, a second inhalation 410b begins at time t4. The measured inhalation strength first exceeds the predetermined inhalation start threshold 406 at time t5 and subsequently falls back below the predetermined inhalation end threshold 404 at time t6.

The second portion of Figure 4 illustrates the intensity of the haptic feedback 430 delivered by the haptic feedback mechanism 38a which is generated over the same time period for each of the two inhalations 410a, 410b.

Until time t2, no haptic feedback is generated. At time t2, the control circuitry 36 determines an inhalation has started (e.g. YES at step S3 of the process shown in Figure 3) From time t2 until time t3, the inhalation feedback 430a comprises haptic feedback whose intensity broadly rises and falls based on the measured inhalation strength. In some embodiments, the intensity of the inhalation feedback is directly related (e.g. in accordance with a predetermined one-to-one correspondence) to the measured inhalation strength. The correspondence may be linear, so that, for example, in general a doubling of inhalation strength may result in a doubling of feedback intensity. However, the disclosure is not so limited and a non-linear mapping may be used.

Furthermore, in some embodiments, a time domain filter may be applied to the feedback, as in the example of Figure 4, in which a rate of decrease in feedback intensity is reduced compared to the rate of decrease of inhalation strength. As a result, in the example of Figure 4, when the inhalation strength falls below the predetermined inhalation end threshold 404, the feedback intensity is non-zero.

Accordingly, in the example of Figure 4, the end of inhalation feedback 440a, 440b is shown as a linear (in time) decline in feedback intensity to zero.

In some embodiments (not shown), the feedback intensity (e.g. of the haptic indication) is constant while the instantaneous strength of inhalation is at or above a maximum feedback intensity threshold. The feedback intensity varies based on the instantaneous strength of inhalation detected by the detector only if the instantaneous strength of inhalation is below the maximum feedback intensity threshold.

Figure 4 also shows an example of visible indications providing visible feedback which may in some embodiments be in the form of the illumination of LEDs based on the measured inhalation strength, which may be combined with, or used as an alternative, to the haptic feedback described above.

In some embodiments where a visual indication is generated when the aerosol provision system is in the standby mode, the visible indication providing visible feedback based on the measured strength of inhalation differs from that used to indicate the standby mode. For example, in an embodiment, an amber LED is continuously illuminated to indicate the standby mode, while the visible indication providing visible feedback based on the measured strength of inhalation does not include the illumination of the amber LED on its own (i.e. without some further feedback indication).

In the example of Figure 4, it is assumed that the feedback unit 38 comprises 3 LEDs, one each of red, amber and green, having on periods 420, 422, 424 respectively to provide visible inhalation feedback 450 and visible end of inhalation feedback 460. In the example of Figure 4, according to the correspondence between inhalation strength and feedback, as inhalation feedback 450a, 450b, an increasing number of LEDs (in the order red, amber, green) are illuminated as the inhalation strength increases.

Accordingly, at time t2 and time t4, initially only the red LED is illuminated. Subsequently, the amber, and then green, LEDs are illuminated. As the inhalation strength decreases, the LEDs are accordingly extinguished in reverse order.

As an 'end of inhalation' visible feedback 460a, 460b, in the example of Figure 4, starting at time t3 and at time t6, each of the LEDs is illuminated, one at a time, in sequence, to indicate to the user that the end of inhalation has been detected.

In the example of Figure 4 the end of inhalation feedback is generated after the detected strength of inhalation falls below a threshold. In the example of Figure 4 the end of inhalation feedback is haptic feedback and/or visible feedback, but in some examples other forms of feedback are used instead. In the example of Figure 4, the end of inhalation feedback is generated immediately after the detected strength of inhalation falls below a threshold. However, the present disclosure is not so limited, and there may be in some examples a delay between the detected strength of inhalation falling below the threshold and the start of the end of inhalation feedback.

The intensity of the end of inhalation feedback may vary over time (as in the example of the end of inhalation haptic feedback 440a, 440b in Figure 4) or may be constant.

An intensity of the end of inhalation feedback may be based on the detected strength of inhalation during the inhalation, for example based on a peak detected strength of inhalation, an average detected strength of inhalation, and/or an aggregate strength of inhalation (such as a measure of total inhalation strength over the duration of the inhalation).

Figure 5 illustrates a use of pulse modulation as a means of providing varying haptic feedback over time during an inhalation. In the example of Figure 5, step S4 is repeated every Δt seconds and an on-off pattern for the subsequent Δt seconds is determined. Within each Δt seconds there is an on-period 502 during which the motor is activated. For the remainder of the Δt seconds is an off-period during which the motor is not activated. Initially, after time t2 (at time t2.0), the inhalation strength is low and accordingly the on period 502a is short, relative to Δt. As the inhalation strength increases, the on periods increase, such that (for example) on period 502c extends to nearly the entire duration Δt. Subsequently as the inhalation strength decreases, the on period times decrease.

In some embodiments, the feedback unit 38 comprises the speaker 38c and one or both of the inhalation feedback and end of inhalation feedback comprises audible sound. A frequency and/or amplitude (volume) of the inhalation feedback may vary in accordance with the measured strength of the inhalation. For example, the amplitude may increase according to a mapping between amplitude and measured inhalation strength.

Thus, in accordance with the instance described herein, the user is able to readily and easily determine the inhalation strength, and how it varies during the course of an inhalation, even though the vapour may not be visible.

While some particular examples have been described above, it will be appreciated that there are many modifications that could be made in accordance with other implementations.

For example, in the implementation represented in Figures 1 and 2, the cartridge comprises its own vaporiser. However, in other examples the vaporiser may, for example, be provided within a control unit part of a vapour provision system.

It will be appreciated that the specific manner in which the vapour is generated in terms of the underlying vapour generation technology is not significant to the underlying principle of providing vapours with a user-selectable degree of visibility.

Additionally, where the above embodiments have disclosed a cover 6 which covers a cartridge 10 and couples to the control unit 2, it should be appreciated that in some implementations the cover 6 may form part of the cartridge 10. That is, the cover 6, cartridge 10, and mouthpiece / opening 8 may be integrally formed.

Thus it will be appreciated that whereas the above-described embodiments have primarily focused on an electrical heater based vaporiser for heating a source liquid, the same principles may be adopted in accordance with vaporisers based on other technologies, for example piezoelectric vibrator based vaporisers, and devices based on other vapour precursor materials, for example gels or solid materials, such as plant derived materials, such as tobacco derivative materials.

More generally, a vapour precursor material (sometimes referred to as an aerosol-generating material) is a material that is capable of generating aerosol, for example when heated, irradiated or energized in any other way. Aerosol-generating material may, for example, be in the form of a solid, liquid or gel which may or may not contain an active substance and/or flavourants. In some embodiments, the aerosol-generating material may comprise an "amorphous solid", which may alternatively be referred to as a "monolithic solid" (i.e. non-fibrous). In some embodiments, the amorphous solid may be a dried gel. The amorphous solid is a solid material that may retain some fluid, such as liquid, within it. In some embodiments, the aerosol-generating material may for example comprise from about 50wt%, 60wt% or 70wt% of amorphous solid, to about 90wt%, 95wt% or 100wt% of amorphous solid. The aerosol-generating material may comprise one or more active substances (such as nicotine) and/or flavours, one or more aerosol-former materials (such as glycerol), and optionally one or more other functional material. The principles of the present disclosure may be applied to any suitable aerosol-generating material.

Thus, there has been described an aerosol provision system for generating an aerosol for inhalation by a user comprising: a housing enclosing at least partially an air channel and an aerosol generating element; a detector configured to detect an instantaneous strength of inhalation by detecting an amount of air flow or a pressure difference in the air channel during an inhalation by the user; a first indicator configured to provide a haptic indication to the user; and a controller connected to the detector and the indicator, the controller configured to control the first indicator to generate the haptic indication to the user during the inhalation, the haptic indication varying during the inhalation based on the instantaneous strength of inhalation detected by the detector.

In order to address various issues and advance the art, this disclosure shows by way of illustration various embodiments in which the claimed invention(s) may be practiced. The advantages and features of the disclosure are of a representative sample of embodiments only, and are not exhaustive and / or exclusive. They are presented only to assist in understanding and to teach the claimed invention as defined in

### References

[1] WO 2018/146455 A1 Vapour Provision System

## Claims

1. An aerosol provision system (1) for generating an aerosol for inhalation by a user comprising:
a housing (17) enclosing at least partially an air channel and an aerosol generating element (15);
a detector (40) configured to detect an instantaneous strength of inhalation by detecting an amount of air flow or a pressure difference in the air channel during an inhalation by the user;
a first indicator (38a) configured to provide a first indication to the user; and
a controller (36) connected to the detector and the first indicator, **characterised in that** the controller is configured to control the first indicator to generate the first indication to the user during the inhalation, the indication varying during the inhalation based on the instantaneous strength of inhalation detected by the detector.

2. A system according to claim 1, wherein no indication is generated unless the instantaneous strength of inhalation exceeds a first predetermined threshold.

3. A system according to claim 1 or claim 2, wherein the first indication is a haptic indication, and wherein an intensity (430) of the haptic indication is varied based on the instantaneous strength of inhalation detected by the detector.

4. A system according to claim 3, wherein the intensity of the haptic indication is varied based on the instantaneous strength of inhalation detected by the detector while the instantaneous strength of inhalation is below a second threshold, and the intensity of the haptic indication is constant while the instantaneous strength of inhalation is at or above the second threshold.

5. A system according to claim 3 or claim 4, wherein the haptic indication comprises a plurality of pulses having a first duration, the pulses separated by a time period of a second duration.

6. A system according to claim 5, wherein the first duration is varied based on the instantaneous strength of inhalation detected by the detector and/or wherein the second duration is varied based on the instantaneous strength of inhalation detected by the detector.

7. A system according to any preceding claim, wherein the controller is configured to control the first indicator to generate a second indication to the user after the inhalation, wherein the second indication is based on the instantaneous strength of inhalation detected by the detector during the inhalation.

8. A system according to any preceding claim, wherein the system comprises a second indicator (38b) for providing a third indication to the user during or after the inhalation, and wherein the third indication is a visual indication.

9. A system according to claim 8, wherein the controller is configured to control the second indicator to generate the third indication to the user after the inhalation.

10. A system according to claim 8 or claim 9, wherein the controller is configured to control the second indicator to generate an indication that the system is in a standby mode, and wherein the indication generated when in the standby mode differs from the third indication provided to the user during or after the inhalation.

11. A system according to any preceding claim, wherein the system comprises a third indicator (38c) for providing a fourth indication to the user during the inhalation, wherein the fourth indication is an audible indication, and wherein the controller is configured to control the third indicator to generate the fourth indication during the inhalation based on the instantaneous strength of inhalation detected by the detector.

12. A system according to any preceding claim, wherein the aerosol generating element is configured to generate the aerosol such that during an exhalation by the user following the inhalation, no exhalate is visible to the user.

13. A system according to any preceding claim, comprising
a user input control (34) for setting an operating mode of the system as one of a plurality of modes including a first operating mode and a second operating mode, wherein
the aerosol generating element is configured to generate the aerosol such that during an exhalation by the user following the inhalation, exhalate is less visible to the user in the first operating mode as compared to the second operating mode.

14. A system according to any preceding claim, wherein the system comprises an obstructing part such that during an exhalation by the user following the inhalation, no exhalate is visible to the user, wherein the obstructing part comprises a head-mountable display.

15. A method of providing an indication to a user during use of an aerosol provision system (1) according to claims 1 to 14 to generate an aerosol for inhalation by a user, the method comprising
detecting an instantaneous puff strength by detecting an amount of air flow or a pressure difference in an air channel of an aerosol provision (1) device during an inhalation by the user; and
**characterised by** generating an indication to the user during the inhalation, the indication varying during the inhalation based on the instantaneous puff strength.

## Patentansprüche

1. Aerosolbereitstellungssystem (1) zum Erzeugen eines Aerosols zur Inhalation durch einen Benutzer, umfassend:
ein Gehäuse (17), das mindestens teilweise einen Luftkanal und ein Aerosolerzeugungselement (15) umschließt;
einen Detektor (40), der ausgestaltet ist, um eine Momentanstärke der Inhalation zu detektieren, indem eine Menge des Luftflusses oder eine Druckdifferenz in dem Luftkanal während einer Inhalation durch den Benutzer detektiert wird;
einen ersten Indikator (38a), der ausgestaltet ist, um dem Benutzer eine erste Angabe bereitzustellen; und
eine Steuerung (36), die mit dem Detektor und dem ersten Indikator verbunden ist, **dadurch gekennzeichnet, dass** die Steuerung ausgestaltet ist, um den ersten Indikator zu steuern, um die erste Angabe an den Benutzer während der Inhalation zu erzeugen, wobei die Angabe während der Inhalation basierend auf der von dem Detektor detektierten Momentanstärke der Inhalation variiert.

2. System nach Anspruch 1, wobei keine Angabe erzeugt wird, bis die Momentanstärke der Inhalation einen ersten vorbestimmten Schwellenwert übersteigt.

3. System nach Anspruch 1 oder Anspruch 2, wobei die erste Angabe eine haptische Angabe ist, und wobei eine Intensität (430) der haptischen Angabe basierend auf der durch den Detektor detektierten Momentanstärke der Inhalation variiert wird.

4. System nach Anspruch 3, wobei die Intensität der haptischen Angabe basierend auf der durch den Detektor detektierten Momentanstärke der Inhalation variiert wird, während die Momentanstärke der Inhalation unter einem zweiten Schwellenwert liegt, und die Intensität der haptischen Angabe konstant ist, während die Momentanstärke der Inhalation auf oder oberhalb von dem zweiten Schwellenwert ist.

5. System nach Anspruch 3 oder Anspruch 4, wobei die haptische Angabe eine Vielzahl von Pulsen mit einer ersten Dauer umfasst, wobei die Pulse durch eine Zeitperiode mit einer zweiten Dauer getrennt sind.

6. System nach Anspruch 5, wobei die erste Dauer basierend auf der durch den Detektor detektierten Momentanstärke der Inhalation variiert wird, und/oder wobei die zweite Dauer basierend auf der durch den Detektor detektierten Momentanstärke der Inhalation variiert wird.

7. System nach einem der vorhergehenden Ansprüche, wobei die Steuerung ausgestaltet ist, um den ersten Indikator zu steuern, um nach der Inhalation eine zweite Angabe an den Benutzer zu erzeugen, wobei die zweite Angabe auf der durch den Detektor während der Inhalation detektierten Momentanstärke der Inhalation basiert.

8. System nach einem der vorhergehenden Ansprüche, wobei das System einen zweiten Indikator (38b) zum Bereitstellen einer dritten Angabe an den Benutzer während oder nach der Inhalation umfasst, und wobei die dritte Angabe eine visuelle Angabe ist.

9. System nach Anspruch 8, wobei die Steuerung ausgestaltet ist, um den zweiten Indikator zu steuern, um eine dritte Angabe an den Benutzer nach der Inhalation zu erzeugen.

10. System nach Anspruch 8 oder Anspruch 9, wobei die Steuerung ausgestaltet ist, um den zweiten Indikator zu steuern, um eine Angabe zu erzeugen, dass sich das System in einem Standby-Modus befindet, und wobei die Angabe, die erzeugt wird, wenn das System im Standby-Modus ist, sich von der dritten Angabe unterscheidet, die dem Benutzer während oder nach der Inhalation bereitgestellt wird.

11. System nach einem der vorhergehenden Ansprüche, wobei das System einen dritten Indikator (38c) zum Bereitstellen einer vierten Angabe an den Benutzer während der Inhalation umfasst, wobei die vierte Angabe eine akustische Angabe ist, und wobei die Steuerung ausgestaltet ist, um den dritten Indikator zu steuern, um während der Inhalation basierend auf der durch den Detektor detektierten Momentanstärke der Inhalation die vierte Angabe zu erzeugen.

12. System nach einem der vorhergehenden Ansprüche, wobei das Aerosolerzeugungselement ausgestaltet ist, um das Aerosol so zu erzeugen, dass während eines Ausatmens durch den Benutzer nach der Inhalation für den Benutzer kein Exhalat sichtbar ist.

13. System nach einem der vorhergehenden Ansprüche, umfassend:
eine Benutzereingabesteuerung (34) zum Festlegen eines Betriebsmodus des Systems als einen von einer Vielzahl von Modi einschließlich eines ersten Betriebsmodus und eines zweiten Betriebsmodus, wobei
das Aerosolerzeugungselement ausgestaltet ist, um das Aerosol so zu erzeugen, dass während eines Ausatmens des Benutzers nach der Inhalation das Exhalat für den Benutzer in dem ersten Betriebsmodus weniger sichtbar ist, verglichen mit dem zweiten Betriebsmodus.

14. System nach einem der vorhergehenden Ansprüche, wobei das System ein Obstruktionsteil umfasst, so dass während eines Ausatmens durch den Benutzer nach der Inhalation für den Benutzer kein Exhalat sichtbar ist, wobei das Obstruktionsteil eine kopfmontierbare Anzeige umfasst.

15. Verfahren zum Bereitstellen einer Angabe an einen Benutzer während der Verwendung eines Aerosolbereitstellungssystems (1) nach den Ansprüchen 1 bis 14, um ein Aerosol zur Inhalation durch einen Benutzer zu erzeugen, wobei das Verfahren umfasst:
Detektieren einer Momentanzugstärke durch Detektieren einer Menge des Luftflusses oder einer Druckdifferenz in einem Luftkanal einer Aerosolbereitstellungsvorrichtung (1) während einer Inhalation durch den Benutzer; und
**gekennzeichnet durch** Erzeugen einer Angabe an den Benutzer während der Inhalation, wobei die Angabe während der Inhalation basierend auf der Momentanzugstärke variiert.

## Revendications

1. Système de délivrance d'aérosol (1) destiné à générer un aérosol pour inhalation par un utilisateur comprenant :
un boîtier (17) renfermant au moins partiellement un canal d'air et un élément générant un aérosol (15) ;
un détecteur (40) configuré pour détecter une force instantanée d'aspiration en détectant une quantité d'écoulement d'air ou une différence de pression dans le canal d'air pendant une aspiration par l'utilisateur ;
un premier indicateur (38a) configuré pour fournir une première indication à l'utilisateur ; et
un dispositif de commande (36) relié au détecteur et au premier indicateur, **caractérisé en ce que** le dispositif de commande est configuré pour commander au premier indicateur de générer la première indication pour l'utilisateur pendant l'aspiration, l'indication variant pendant l'aspiration sur la base de la force instantanée d'aspiration détectée par le détecteur.

2. Système selon la revendication 1, dans lequel aucune indication n'est générée sauf si la force instantanée d'aspiration dépasse un premier seuil prédéterminé.

3. Système selon la revendication 1 ou la revendication 2, dans lequel la première indication est une indication haptique, et dans lequel une intensité (430) de l'indication haptique varie sur la base de la force instantanée d'aspiration détectée par le détecteur.

4. Système selon la revendication 3, dans lequel l'intensité de l'indication haptique varie sur la base de la force instantanée d'aspiration détectée par le détecteur pendant que la force instantanée d'aspiration est inférieure à un deuxième seuil, et l'intensité de l'indication haptique est constante pendant que la force instantanée d'aspiration est égale ou supérieure au deuxième seuil.

5. Système selon la revendication 3 ou la revendication 4, dans lequel l'indication haptique comprend une pluralité d'impulsions ayant une première durée, les impulsions étant séparées par un laps de temps d'une deuxième durée.

6. Système selon la revendication 5, dans lequel la première durée varie sur la base de la force instantanée d'aspiration détectée par le détecteur et/ou dans lequel la deuxième durée varie sur la base de la force instantanée d'aspiration détectée par le détecteur.

7. Système selon une quelconque revendication précédente, dans lequel le dispositif de commande est configuré pour commander au premier indicateur de générer une deuxième indication pour l'utilisateur après l'aspiration, dans lequel la deuxième indication est basée sur la force instantanée d'aspiration détectée par le détecteur pendant l'aspiration.

8. Système selon une quelconque revendication précédente, le système comprenant un deuxième indicateur (38b) destiné à fournir une troisième indication à l'utilisateur pendant ou après l'aspiration, et dans lequel la troisième indication est une indication visuelle.

9. Système selon la revendication 8, dans lequel le dispositif de commande est configuré pour commander au deuxième indicateur de générer la troisième indication pour l'utilisateur après l'aspiration.

10. Système selon la revendication 8 ou la revendication 9, dans lequel le dispositif de commande est configuré pour commander au deuxième indicateur de générer une indication indiquant que le système est en mode veille, et dans lequel l'indication générée dans le mode veille diffère de la troisième indication fournie à l'utilisateur pendant ou après l'aspiration.

11. Système selon une quelconque revendication précédente, le système comprenant un troisième indicateur (38c) destiné à fournir une quatrième indication à l'utilisateur pendant l'aspiration, dans lequel la quatrième indication est une indication sonore, et dans lequel le dispositif de commande est configuré pour commander au troisième indicateur de générer la quatrième indication pendant l'aspiration sur la base de la force instantanée d'aspiration détectée par le détecteur.

12. Système selon une quelconque revendication précédente, dans lequel l'élément générant un aérosol est configuré pour générer l'aérosol de telle sorte que, pendant une expiration par l'utilisateur suivant l'aspiration, aucune vapeur expirée n'est visible pour l'utilisateur.

13. Système selon une quelconque revendication précédente, comprenant
un organe de commande d'entrée utilisateur (34) destiné à régler un mode de fonctionnement du système sur l'un d'une pluralité de modes incluant un premier mode de fonctionnement et un deuxième mode de fonctionnement, dans lequel
l'élément générant un aérosol est configuré pour générer l'aérosol de telle sorte que, pendant une expiration par l'utilisateur suivant l'aspiration, la vapeur expirée est moins visible pour l'utilisateur dans le premier mode de fonctionnement que dans le deuxième mode de fonctionnement.

14. Système selon une quelconque revendication précédente, le système comprenant une partie obstruante, de telle sorte que, pendant une expiration par l'utilisateur suivant l'aspiration, aucune vapeur expirée n'est visible pour l'utilisateur, dans lequel la partie obstruante comprend un visiocasque.

15. Procédé destiné à fournir une indication à un utilisateur pendant l'utilisation d'un système de délivrance d'aérosol (1) selon les revendications 1 à 14 pour générer un aérosol pour inhalation par un utilisateur, le procédé comprenant :
la détection d'une force instantanée de tirage par détection d'une quantité d'écoulement d'air ou d'une différence de pression dans un canal d'air d'un dispositif de délivrance d'aérosol (1) pendant une aspiration par l'utilisateur ; et
**caractérisé par** la génération d'une indication pour l'utilisateur pendant l'aspiration, l'indication variant pendant l'aspiration sur la base de la force instantanée de tirage.
